# EUROPÄISCHE PATENTANMELDUNG

(11) **EP 0 841 222 A1**
(43) Veröffentlichungstag der Anmeldung: **13.05.1998**
(21) Anmeldenummer: 97111403.8
(22) Anmeldetag: 05.07.1997
(51) Int. Cl.: B60R 21/13, B60R 21/32, B60R 22/46, B60R 21/16

(54) **Sicherheitssystem für Fahrzeuginsassen**

(30) Priorität: 08.11.1996 DE 19646026
(71) Anmelder: ROBERT BOSCH GMBH, 70442 Stuttgart (DE)
(72) Erfinder: Mattes, Bernhard, 74343 Sachsenheim (DE); Nitsche, Werner, 71254 Ditzingen (DE); Dietrich, Bergfried, 71032 Böblingen (DE); Mehler, Gerhard, 74534 Besigheim (DE); Grösch, Lothar, 70374 Stuttgart (DE)

(57) **Zusammenfassung**

Ein Sicherheitssystem für Fahrzeuginsassen besteht aus einem Steuergerät (SG) und mehreren damit über einen Datenbus (BS) in Verbindung stehenden Schaltmodulen (SM1 ... SMn) - vorzugsweise Crash-Sensoren, Zündendstufen, Zündkreisdiagnoseschaltungen, Energiereserveschaltungen - zur Aktivierung von Rückhalteeinrichtungen. Zur Diebstahlsicherung ist in jedem Schaltmodul (SM1 ... SMn) ein Identifikationscode abgespeichert und im Steuergerät (SG) sind ausschließlich die Identifikationscodes von Schaltmodulen (SM1 ... SMn) abgespeichert, welche zusammen mit dem Steuergerät (SG) regulär in ein Fahrzeug eingebaut worden sind.

## Beschreibung

### Stand der Technik

Die vorliegende Erfindung betrifft ein Sicherheitssystem für Fahrzeuginsassen, bestehend aus einem Steuergerät und mehreren damit über einen Datenbus in Verbindung stehenden Schaltmodulen - vorzugsweise Crash-Sensoren, Zündendstufen, Zündkreisdiagnose-, Energiereserveschaltungen - zur Aktivierung von Rückhalteeinrichtungen. Ein solches Sicherheitssystem, bei dem mehrere Sensoren zur Erfassung unfallspezifischer Parameter zusammen mit einem Steuergerät zur Auswertung der Sensorsignale und Aktivierung von Rückhalteeinrichtungen an einen Datenbus geschaltet sind, ist aus der DE 38 11 217 C2 bekannt.

Die stetig steigende Leistungsfähigkeit von Rückhaltesystemen in Kraftfahrzeugen führt zu einer stark wachsenden Zahl von Schaltmodulen, welche für die Aktivierung von z.B. Airbags für den Fahrer, den Beifahrer, für Fondinsassen, von Seitenairbags, von Kniepolstern, von Gurtstraffern, von Überrollbügeln usw. erforderlich sind. Solche Schaltmodule sind beispielsweise Crash-Sensoren, Zündendstufen, Zündkreisdiagnoseschaltungen, Energiereserveschaltungen, Sitzbelegungssensoren usw.. Eine Einzelverdrahtung aller Schaltmodule mit einem zentralen Steuergerät würde zu einer viel Raum und Gewicht in Anspruch nehmenden Verkabelung führen. Deshalb ist man dazu übergegangen, diese Schaltmodule über einen Datenbus miteinander zu vernetzen, wie z.B. aus der DE 38 11 217 C2 oder der DE 43 35 991 A1 oder der EP 0 439 559 B1 hervorgeht.

Mittlerweile tritt das Problem auf, daß die genannten Schaltmodule aus Fahrzeugen entwendet werden, um sie evtl. in andere Fahrzeuge wieder einzusetzen. Es ist daher die Aufgabe der Erfindung, ein Sicherheitssystem der eingangs genannten Art anzugeben, daß einen guten Schutz vor Diebstahl der Schaltmodule gewährleistet.

### Vorteile der Erfindung

Diese Aufgabe wird gemäß den Merkmalen des Anspruchs 1 dadurch gelöst, daß zur Diebstahlsicherung in jedem Schaltmodul ein Identifikationscode abgespeichert ist und daß im Steuergerät ausschließlich die Identifikationscodes von Schaltmodulen abgespeichert sind, welche zusammen mit dem Steuergerät regulär in ein Fahrzeug eingebaut worden sind. Wird ein solches Schaltmodul aus einem Fahrzeug entwendet, so kann es nicht in einem anderen Fahrzeug eingesetzt werden, weil es von dem dort vorhandenen Steuergerät nicht als funktionsfähiges Schaltmodul erkannt wird.

Gemäß einem Unteranspruch fragt das Steuergerät vor Inbetriebnahme des Sicherheitssystems die Identifikationscodes aller Schaltmodule ab und signalisiert, wenn es einen Identifikationscode nicht erkennt. Ein Steuergerät akzeptiert also ein Schaltmodul mit einem ihm nicht bekannten Identifikationscode nicht. Deshalb ist es nicht mehr attraktiv, Schaltmodule aus fremden Fahrzeugen zu entwenden, um sie in anderen Fahrzeugen einzusetzen. Es ist zweckmäßig, daß der Identifikationscode für jedes Schaltmodul aus mindestens drei Bytes besteht, um eine möglichst große Anzahl verschiedener Identifikationscodes realisieren zu können.

### Beschreibung eines Ausführungsbeispiels

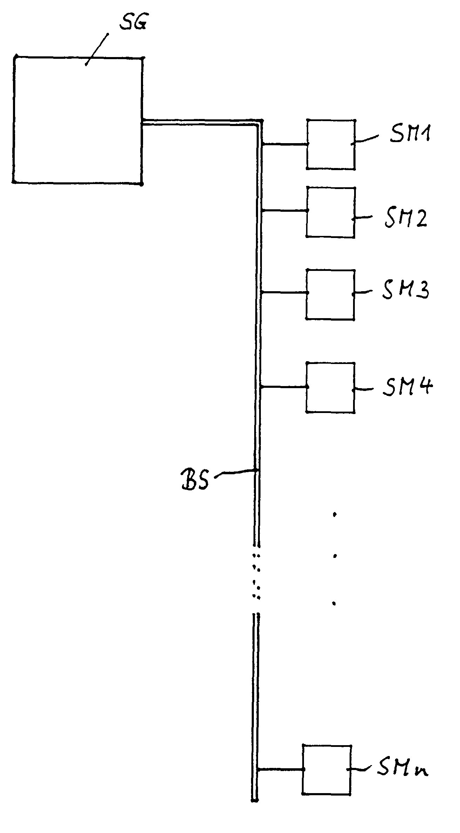

Anhand eines in der Zeichnung dargestellten Ausführungsbeispiels wird nachfolgend die Erfindung näher erläutert.

Wie in der Beschreibungseinleitung bereits ausgeführt, geht der Trend dahin, die Sicherheitssysteme in Kraftfahrzeugen weiter auszubauen. Es werden Airbags installiert, für den Fahrer, den Beifahrer, in allen Seitentüren und im Fond, auch zum Schutz der Knie im Frontbereich werden Airbags vorgesehen, zudem gibt es Gurtstraffer und unter Umständen auch Überrollschutzeinrichtungen. All diese Rückhaltemittel erfordern eine große Zahl von Zündkreisen, die neben Crash-Sensoren und Sensoren zur Sitzbelegungserkennung im Fahrzeug untergebracht werden müssen.

Es empfiehlt sich, die für die Rückhalteeinrichtungen erforderlichen Aktivierungsschaltungen in kleinere Schaltmodule aufzuteilen und sie an geeigneten Orten im Kraftfahrzeug anzuordnen. Durch eine solche Aufteilung in einzelne kleinere Schaltmodule ist eine platzsparendere Unterbringung der Schaltungen im Kraftfahrzeug möglich. Solche Schaltmodule können neben einem zentralen Steuergerät mehrere Crash-Sensoren, Zündendstufen, Zündkreisdiagnoseschaltungen, Energieversorgungsschaltungen, Sensoren zur Sitzbelegungserkennung und dergleichen sein. Durch diese Modulbauweise braucht das zentrale Steuergerät nur noch den Algorithmus für die Aktivierung der Rückhalteeinrichtungen zu bearbeiten und die Kommunikation mit den einzelnen Schaltmodulen durchzuführen. Die Zündendstufen können direkt an den Gasmodulen der einzelnen Rückhalteeinrichtungen angeordnet sein, so daß vom zentralen Steuergerät kein Zündstrom mehr übertragen werden muß, sondern nur noch Steuersignale für die Zündendstufen.

Wie der Figur der Zeichnungen zu entnehmen ist, ist es hinsichtlich einer Einsparung an Verkabelungsaufwand zweckmäßig, daß sämtliche Schaltmodule SM1, SM2, SM3, SM4, ... SMn zusammen mit dem zentralen Steuergerät SG an einen gemeinsamen seriellen Datenbus BS angeschlossen werden. Als Datenbus kommt ein CAN-Bus in Frage, wie er bekannterweise bereits in der Kraftfahrzeugtechnik eingesetzt wird (vgl. z.B. EP 0 439 559 B1). Wie der Datentransfer zwischen den einzelnen an den Datenbus BS angeschlossenen Schaltmodulen und dem Steuergerät abläuft, muß hier nicht näher erläutert werden, da Verfahren zur Datenübertragung auf Datenbussen hinlänglich bekannt sind. Zum Beispiel in der DE 38 11 217 C2 ist ein Datenbus beschrieben, welcher den Datenaustausch zwischen einem zentralen Steuergerät und mehreren Sensoren eines Kraftfahrzeug-Sicherheitssystems vornimmt.

In jedem der an den Datenbus BS angeschlossenen Schaltmodule SM1, SM2, SM3, SM4, ... SMn ist ein eigener Identifikationscode abgespeichert. Dieselben Identifikationscodes werden auch in das zentrale Steuergerät SG einprogrammiert. Und zwar erfolgt die Einprogrammierung der Identifikationscodes in den Schaltmodulen SM1, SM2, SM3, SM4, ... SMn und in das Steuergerät SG am Ende des Fertigungsbandes, nachdem die Schaltmodule und das Steuergerät zusammen in einem Fahrzeug eingebaut worden sind. Diese Identifikationscodes sollen der Diebstahlsicherung dienen. Das Steuergerät SG kennt nur die Identifikationscodes der Schaltmodule, die mit ihm zusammen regulär in ein Fahrzeug eingebaut worden sind. Um festzustellen, ob alle in einem Fahrzeug befindlichen Schaltmodule regulär darin eingebaut worden sind, führt das Steuergerät SG vor der eigentlichen Inbetriebnahme des Sicherheitssystems in einem sogenannten Pre-Drive-Check eine Abfrage der Identifikationscodes aller Schaltmodule im Fahrzeug durch. Sollte sich unter den Schaltmodulen eines befinden, dessen Identifikationscode von dem Steuergerät nicht erkannt wird, so signalisiert das Steuergerät durch ein optisches oder akustisches Alarmsignal den fehlerhaften Zustand im Sicherheitssystem. Dieses Schaltmodul wird dann im Crashfall nicht angesteuert. In Absprache mit dem Fahrzeughersteller wäre es natürlich auch möglich, ein nicht identifiziertes Schaltmodul aus Sicherheitsgründen im Crash-Fall doch anzusteuern und nur einen Fehler zu signalisieren. Über diese Identifikationscodes der einzelnen Schaltmodule kann sicher festgestellt werden, ob sie rechtmäßig in das Fahrzeug eingebaut worden sind oder ob sich darunter ein evtl. aus einem anderen Fahrzeug entwendetes Schaltmodul befindet.

Da der Identifizierungsprozeß der einzelnen Schaltmodule als Pre-Drive-Check durchgeführt wird, kann die Übertragungsdauer für die Identifikationscodes an das Steuergerät relativ groß gewählt werden (z.B. 100 ms). Das läßt es zu, daß die Identifikationcodes aus mehr als zwei Bytes bestehen. Schon wenn jeder Identifikationscode aus drei Bytes besteht, läßt sich eine sehr große Zahl von Fahrzeugen mit unterschiedlich codierten Schaltmodulen ausstatten. Würde man den Identifikationscodes eine Wortlänge von drei Bytes geben, so gäbe es 2^{3·8} = 16777216 verschiedene Codes. Geht man beispielsweise davon aus, daß in einem Fahrzeug acht Schaltmodule vorhanden sind, so könnten damit 16777216/8 = 2097152 Fahrzeuge mit unterschiedlich codierten Schaltmodulen ausgerüstet weden. Bei einer Länge der Identifikationscodes von vier Bytes gäbe es bereits 536870913 Fahrzeuge mit jeweils 8 verschieden codierten Schaltmodulen.

## Patentansprüche

1. Sicherheitssystem für Fahrzeuginsassen, bestehend aus einem Steuergerät und mehreren damit über einen Datenbus in Verbindung stehenden Schaltmodulen - vorzugsweise Crash-Sensoren, Zündendstufen, Zündkreisdiagnose-, Energiereserveschaltungen - zur Aktivierung von Rückhalteeinrichtungen, dadurch gekennzeichnet, daß zur Diebstahlsicherung in jedem Schaltmodul (SM1 ... SMn) ein Identifikationscode abgespeichert ist und daß im Steuergerät (SG) ausschließlich die Identifikationscodes von Schaltmodulen (SM1 ... SMn) abgespeichert sind, welche zusammen mit dem Steuergerät (SG) regulär in ein Fahrzeug eingebaut worden sind.

2. Sicherheitssystem nach Anspruch 1, dadurch gekennzeichnet, daß das Steuergerät (SG) vor Inbetriebnahme des Sicherheitssystems die Identifikationscodes aller Schaltmodule (SM1 ... SMn) abfragt und signalisiert, wenn es einen Identifikationscode nicht erkennt.

3. Sicherheitssystem nach Anspruch 1 oder 2, dadurch gekennzeichnet, daß der Identifikationscode aus mindestens drei Bytes besteht.
